# EUROPÄISCHE PATENTSCHRIFT

(11) **EP 1 179 975 B1**
(45) Veröffentlichungstag und Bekanntmachung des Hinweises auf die Patenterteilung: **03.05.2006**
(21) Anmeldenummer: 00929524.7
(22) Anmeldetag: 11.05.2000
(51) Int. Cl.: A01J 5/013, A01J 5/00

(54) **VORRICHTUNG ZUR AUTOMATISCHEN MILCHAUSSONDERUNG**
AUTOMATIC MILK SELECTION DEVICE
DISPOSITIF POUR L'ELIMINATION AUTOMATIQUE DE LAIT

(30) Priorität: 11.05.1999 DE 19921777
(43) Veröffentlichungstag der Anmeldung: 20.02.2002
(73) Patentinhaber: Maier, Jakob, Jun., 86842 Türkheim (DE)
(72) Erfinder: Maier, Jakob, Jun., 86842 Türkheim (DE)
(74) Vertreter: Pfau, Anton Konrad
(86) Internationale Anmeldenummer: PCT/EP2000/004280
(87) Internationale Veröffentlichungsnummer: WO 2000/067559

(56) Entgegenhaltungen:
- EP-A- 0 399 604
- WO-A-00/27183
- DE-A- 19 630 146
- DE-C- 4 007 327
- US-A- 5 722 343

## Beschreibung

Die Erfindung betrifft eine Vorrichtung zur automatischen Milchaussonderung beim maschinellen Melken, mit einer Meßeinrichtung zum Überwachen der Qualität der gewonnen Milch, einer Wegeventileinrichtung mit einem Milcheingang und mehreren Milchausgängen sowie einer Verschlußeinrichtung zur wahlweisen Absperrung der Milchausgänge und zum wahlweisen Leiten des Milchstroms in einen von mehreren Leitungswegen, und einer zur Aussonderung von Milch die Wegeventileinrichtung betätigenden Steuereinrichtung.

Bekannterweise gelangt beim maschinellen Melken Milch von einer großen Anzahl von Tieren in Sammelbehälter. Dabei kann die sich ergebende Milchqualität durch Milch von erkrankten Tieren, insbesondere solchen mit einer beginnenden und noch nicht erkannten Erkrankung, stark beeinträchtigt sein. Zur Sicherung einer hohen Milchqualität ist es daher erforderlich, während des Melkvorgangs eine Untersuchung der Milch vorzunehmen und bei Erkennung einer unzureichenden Qualität die Milch auszusondem, bevor sie in den Sammelbehälter gelangt.

Insbesondere darf Rohmilch gemäß §3 der Milchverordnung keine "anomalen sensorischen Merkmale" aufweisen. Die Beurteilung der Qualität der Milch während des automatischen Melkvorgangs auf Veränderungen ist in bekannten Anlagen bereits möglich. Es sind Vorrichtungen der eingangs beschriebenen Art bekannt, die sich die Tatsache zunutze machen, daß sich der lonengehalt der Milch erkrankter Tiere von demjenigen der Milch gesunder Tiere unterscheidet Als Parameter, anhand dessen eine Aussonderung von Milch unzureichender Qualität erfolgen kann, dient daher die Leitfähigkeit der Milch.

Eine Vorrichtung dieser Art ist in der DE 196 30 146 veröffentlicht In der darin beschriebenen Melkvorrichtung ist im Ventilgehäuse eine über wenigstens eine Öffnung mit dem Gehäuseinneren in Fluidverbindung stehende Meßkammer mit einer Sensoreinrichtung für die Erfassung der Leitfähigkeit und Temperatur der Milch angeordnet Diese Anordnung ermöglicht insbesondere eine zuverlässige Feststellung von Mastitis-Erkrankungen der gemolkenen Kühe. Zur Erfüllung der gesetzlichen Anforderungen wäre es wünschenswert, noch weitere Ursprünge sinnfälliger Veränderungen der Milch zu erkennen und entsprechend eine Aussonderung der Milch zu steuern.

Es ist daher die Aufgabe der vorliegenden Erfindung, eine neue Vorrichtung und ein neues Verfahren zur automatischen Milchaussonderung der eingangs erwähnten Art zu schaffen, die gegenüber herkömmlichen derartigen Vorrichtungen bzw. Methoden den sich aus der Qualitätssicherung für die Milch ergebenden Erfordernissen, insbesondere der Überwachung anomaler sensorischer Merkmale, in höherem Maße gerecht wird.

Diese Aufgabe wird erfindungsgemäß gelöst durch eine Vorrichtung, wie sie in Anspruch 1 definiert ist.

Durch die Partikeldetektion ist es möglich, zu bestimmen, ob Partikel im Milchstrom vorhanden sind, welche sich durch krankhafte Veränderungen bilden, oder durch Verschmutzung am Euter oder in der Melkanlage in den Milchstrom gelangen. Die erstgenannten Partikel sind insbesondere eitrige Flocken, die mit einer Größe von 0.5 bis 3 mm auftreten können. Insbesondere bei Krankheiten, die mit einer Eiterbildung im Bereich des Euters einhergehen, treten Eiterpartikel in der Milch auf, die nunmehr gemäß der vorliegenden Erfindung auch beim maschinellen Melken feststellbar sind.

In einer bevorzugten Ausführungsform umfasst die Detektiereinrichtung einen Signalgeber zum Ausgeben von Signalen und einen Signalempfänger zum Aufnehmen von Signalen. Die Aussendung von geeigneten Signalen, welche durch die Milch und die darin enthaltenen Partikel jeweils in unterschiedlicher Weise beeinflusst werden, erlaubt einen Nachweis von Partikeln, der im wesentlichen ohne Störung des Milchflusses ausgeführt werden kann. Dazu bieten sich bevorzugt optische Signalgeber und Empfänger, sowie Geber und Empfänger, die im Mikrowellenbereich arbeiten, an.

In weiterer vorteilhafter Ausführung der vorliegenden Erfindung umfasst die Detektiereinrichtung eine elektronische Auswertungsschaltung, welcher vom Signalempfänger Daten übermittelt werden. Die Auswertungsschaltung ist dabei bevorzugt als Mikrokontroller ausgeführt, der mit dem Signalgeber und Empfänger Daten über beispielsweise elektrische Leitungen oder auch über eine drahtlose Verbindung austauschen kann. Wenn es sich bei dem Signalgeber und Empfänger um Strom- und Spannungsquellen bzw. - Sensoren handelt, können diese auch im Mikrokontroller integriert sein. Für die Auswertungsschaltung lässt sich damit ein sehr kompakter, störungssicherer und robuster Aufbau verwirklichen.

In weiterer vorteilhafter Ausführung umfasst die Detektiereinrichtung eine Einrichtung zum Reinigen des Filterelements. Dadurch ist es möglich, quantitative Messungen während des gesamten Melkvorgangs durchzuführen, da konstante Messbedingungen am Filterelement während des gesamten Melkvorgangs aufrecht erhalten werden können, indem Partikel vom Filterelement wieder entfernt werden. Es ist daher möglich, während der unterschiedlichen Stadien des Melkvorgangs, in denen die Qualität der Milch durchaus unterschiedlich sein kann, die Milch entsprechend auszusondem.

In einer vorteilhaften Weiterbildung dieser Ausführungsform ist das Filterelement um eine Achse drehbar ausgeführt. Insbesondere wenn das Filterelement beispielsweise als Gitter oder als Filter mit lediglich Längselementen ausgeführt ist, ist es wirkungsvoll, das Filterelement zu drehen, um ein Abwaschen von Partikeln auf der Gitteroberfläche mittels des Milchstroms durchzuführen. Dabei kann das Filterelement so positioniert werden, dass Partikel, die auf der einen Oberfläche des Gitters haften, von hinten angeströmt werden, während die partikelfreie Oberfläche des Gitters Partikel aus dem Milchstrom aussondert. Auch eine nahezu parallele Anströmung durch den Milchstrom im Verhältnis zur Gitteroberfläche ist möglich.

Bevorzugt umfasst die Detektiereinrichtung eine Antriebseinheit zur Drehung des Filterelements. Damit kann die Reinigung des Filterelements vor jedem Messvorgang, unabhängig vom Kontaminationsgrad, durchgeführt werden, wobei geeigneterweise der Mikrokontroller die Ansteuerung der Antriebseinheit übemimmt.

In weiterer vorteilhafter Ausführung umfaßt das Filterelement beabstandete und zueinander isoliert angeordnete elektrisch leitfähige Elemente. Wenn in diese Elemente Strom bzw Spannung eingeprägt wird, kann in einfacher Weise die Menge der vorhandenen Partikel auf der Filteroberfläche nachgewiesen werden, da sich die Widerstandsvefiältnisse im Filterelement als Folge der abgelagerten Partikel verändem.

Vorteilhafterweise ist die Leitfähigkeit der Elemente abhängig von der Länge der Elemente. Es ist dadurch möglich, Information über die Partikelgröße zu erhalten.

In einer weiteren bevorzugten Ausführungsform umfaßt das Filterelement einen Bereich, in dem die leitfähigen Elemente jeweils einen ersten Abstand voneinander aufweisen und einen weiteren Bereich, in dem die leitfähigen Elemente jeweils einen zweiten Abstand voneinander aufweisen. Damit ist es möglich, die Partikel nach Größe zu selektieren, um damit beispielsweise Information über die Art der Erkrankung des Tieres zu gewinnen.

In weiterer vorteilhafter Ausgestaltung der Erfindung unter Verwendung eines Filterelements umfaßt die Detektiereinrichtung eine Strahlungsquelle zur Aussendung von elektromagnetischer Strahlung in Richtung auf das Filterelement und ein strahlungsempfindliches Sensorelement zum Empfang der ausgesendeten Strahlung aus der Richtung des Filterelements. Mit dieser Anordnung gestaltet sich der Aufbau des Filterelements sehr einfach, da keine elektrischen Zuleitungen nötig sind. Die Strahlungsquelle und das strahlungsempfindliche Sensorelement sind dabei so angeordnet daß das strahlungsempfindliche Sensorelement die Strahlung nach erfolgter Wechselwirkung mit einer Oberfläche des Filterelements empfängt.

Die Partikeldetektion erfolgt insbesondere durch Messung des Intensitätsverlustes beim Durchstrahlen des Filterelements, also in Transmission. Vorzugsweise wird für diese Messung das Filterelement in eine geeignete Position gedreht, beispielsweise, wenn das Filterelement ohnehin in die "Reinigungsstellung" gebracht wird, wobei die Messung während der Drehung stattfinden kann.

In weiterer vorteilhafter Ausgestaltung weist das Filterelement einen reflektierenden Bereich auf. Durch Messung der reflektierten Intensität ist die Bestimmung der Menge der abgelagerten Partikel in einfacher Weise möglich.

In weiterer vorteilhafter Ausgestaltung ist die Strahlungsquelle ausgebildet, im wesentlichen monochromatische Strahlung zu emittieren. Für die emittierte Strahlung wird vorzugsweise eine Wellenlänge gewählt, bei der die zu detektierenden Partikel in der Milch sich signifikant unterschiedlich im Vergleich zur Strahlungswechselwirkung der Milch verhalten, so daß sich ein deutlicher Meßeffekt einstellt Geeigneterweise verfügt die Strahlungsquelle über mehrere, auswählbare Wellenlängen.

In einer weiteren bevorzugten Ausführungsform ist die Strahlungsquelle: so angeordnet, daß sie während einer Meßphase Strahlung im wesentlichen parallel zur Filteroberfiäche aussendet. Der Nachweis von Partikeln ab einer vorgegebenen Ausdehnung kann durch geeignete Wahl des Abstands der Strahlungsquelle und des Empfängers von der Filteroberfläche erreicht werden. Beispielsweise unterbrechen Partikel die parallel zur Filteroberfläche verlaufenden Lichtstrahlen von Laserdioden erst ab einer bestimmten Größe und abhängig von Abstand der Strahlen von der Filteroberfläche den Kontakt zum Empfänger.

In einer weiteren bevorzugten Ausführungsform ist der Signalgeber ein Ultraschallsender. Dieser läßt in einfacher Weise den Nachweis der Partikel direkt im Milchstrom zu, ohne eine große Beeinflussung des Strömungsverhaltens der Milch zu verursachen.

Vorteilhafterweise sind der Ultraschallsender und der Signalempfänger räumlich so angeordnet, daß ein Kontakt mit der Flüssigkeit während des Betriebs möglich ist. Dies bewirkt, daß das Aussenden und Detektieren nicht signifikant durch das Betriebsvakuum beeinträchtigt werden. Weiterhin kann dadurch der Aufbau in einfacher Weise mit der eingangs beschriebenen Vorrichtung zur Messung der Leitfähigkeit der Milch kombiniert werden, indem die in dieser Schrift beschriebene Meßkammer mit einem Ultraschallsender und einem Ultraschallempfänger ergänzt wird.

In einer weiteren bevorzugten Ausführungsform umfaßt die Detektiereinrichtung eine Schwingungswaage mit einem Piezoelement und einer Schwingkreisschaltung. Durch diese Anordnung läßt sich die Gewichtsänderung des Filterelements sehr genau bestimmen, wodurch eine genaue quantitative Information über die Menge der abgelagerten Partikel gewonnen werden kann.

Weitere vorteilhafte Ausgestaltungsmöglichkeiten gehen aus den Unteransprüchen hervor.

Die Erfindung soll nun anhand von Ausführungsbeispielen und der beiliegenden, sich auf diese Ausführungsbeispiele beziehenden Zeichnungen näher erläutert und beschrieben werden. Es zeigen:
- Fig. 1 a und 1b:: schematisch einen Querschnitt durch eine erste Ausführungsform einer Detektiereinrichtung gemäß der vorliegenden Erfindung,
- Fig. 2: einen schematischen Querschnitt durch eine zweite Ausführungsform einer Detektiereinrichtung gemäß der vorliegenden Erfindung,
- Fig. 3: einen schematischen Querschnitt durch die Detektiereinrichtung entlang dem Schnitt III-III aus Fig. 2,
- Fig. 4: ein Beispiel eines Filterelements gemäß der Erfindung in einer Draufsicht,
- Fig. 5: einen schematischen Querschnitt durch eine weitere Ausführungsform der Detektiereinrichtung mit optischem Signalgeber und Empfänger, und
- Fig. 6: einen schematischen Querschnitt durch eine weitere Ausführungsform der Detektiereinrichtung der vorliegenden Erfindung.

Im allgemeinen weist eine automatische Melkanlage (in den Figuren nicht gezeigt) vier Melkbecher auf, die über kurze Milchschläuche mit einem Sammel- und Mehrwegeventil gekoppelt sind. Das Mehrwegeventilstück weist neben seinen vier Einlaßöffnungen-zwei wahlweise zu öffnende und schließende Auslaßöffnungen auf. An einer Auslaßöffnung ist ein Milchschlauch angeschlossen, der zu einem Sammelbehälter führt Der andere Anschluß ist mit einer Milchaussonderungsleitung verbunden. An beiden Leitungen ist bei Betrieb ein Vakuum bzw. ein Unterdruck von ca. 40-50 kPa anlegbar, das auch in den Melkbechem anliegt und zum Absaugen der Milch aus den Zitzen dient.

Die Melkbecher sind an ihren Innenseiten mit sogenannten Zitzengummis ausgekleidet, die aus einem weichen Material bestehen und beim Betrieb der Melkanlage in direkten Kontakt mit den Zitzen der Kuh kommen. Während der Saugphase fließt der Milchstrom vom Zitzenbecher über eine Verbindungsleitung (kurzer Milchschlauch) zum Wegeventil, in dem die Milch auf die verschiedenen Leitungen durch automatische Betätigung des Ventils verteilt wird. Die Ableitung der Milch in die Aussonderungsleitung ist u.a. deshalb erforderlich, da der Gesetzgeber eine Aussonderung von Milch, die die in der Milchverordnung spezifizierten Anforderungen nicht erfüllt, vorschreibt.

Vom Wegeventil gelangt die Milch über den sogenannten langen Milchschlauch in den Sammelbehälter. Die Milch wird pulsartig etwa 60 Mal pro Minute abgesaugt. Während das Betriebsvakuum an den Milchsammel- bzw. Aussonderungsleitungen permanent anliegt, wird an den Melkbecher, der aus starrem Material ist und in dem der Zitzengummi vakuumdicht angeordnet ist, gepulst abwechselnd Vakuum und Umgebungsdruck angelegt. Sobald Vakuum im Inneren des Melkbechers herrscht, dehnt sich der Zitzengummi aufgrund seiner eigenen Elastizität aus und ermöglicht einen Miichdurchfluß hin zum kurzen Milchschlauch und zur Absaugleitung. Wenn Atmosphärendruck im Inneren des Melkbechers herrscht, wird der elastische Zitzengummi, in dessen Inneren das Vakuum von der Milchabsaugleitung anliegt und dessen anderes Ende bei Betrieb durch die Zitze verschlossen ist, zusammengedrückt, so daß keine Milch durchfließen kann. Durch den gepulsten Betrieb wird eine Massagewirkung der Zitze erreicht, die zur Gesunderhaltung der Zitzen und der Tiere notwendig ist.

Die erfindungsgemäß Detektiereinrichtung kann prinzipiell an jeder beliebigen Stelle des Milchstroms installiert sein, jedoch wird man geeigneterweise eine Stelle wählen, an der sich elektrische oder pneumatische Verbindungsleitungen nicht im Trittbereich des Tieres befinden.

Femer soll betont werden, daß die erfindungsgemäße Detektiereinrichtung so ausgebildet ist, daß sie sowohl während des gesamten Melkvorgangs, als auch lediglich während bestimmter Phasen des Melkvorgangs, beispielsweise während des Vorgemelks, betrieben werden kann.

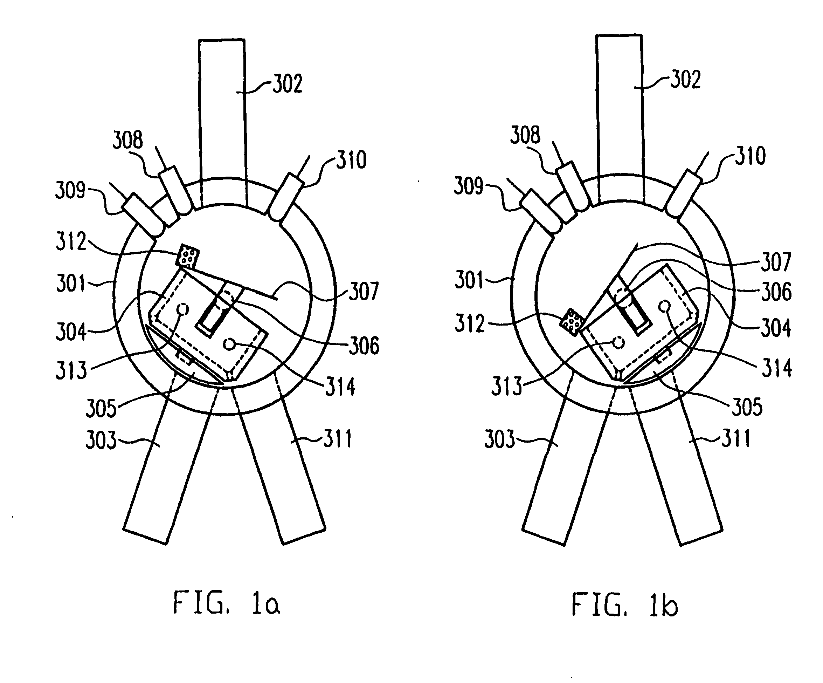

Die Figuren 1a und 1b zeigen beispielsweise schematisch eine Ausführungsform, in der eine erfindungsgemäße Partikefdetektiereinrichtung zusammen mit einer in der DE 196 30 146 beschriebenen Meßkammer im Wegeventil untergebracht ist.

Fig. 1a zeigt ein Wegeventil 301 mit einem Milcheinlaß 302, einem Milchauslaß 303, der die verwertbare Milch aufnimmt und einem Milchauslaß 311, der die auszusonderinde Milch aufnimmt. Eine Meßkammer 304 ist mit einem Schieber 305 mechanisch gekoppelt. Die Meßkammer 304 und der Schieber 305 sind an einer drehbaren Achse 306 befestigt Die Achse 306 ist mit einem Schrittmotor (nicht gezeigt) verbunden. An der Meßkammer 304 ist ein Filterelement 307 befestigt Das Filterelement 307 ist als dünnes Metallplättchen mit reflektierender Oberfläche, die siebartige Bohrungen mit einem Durchmesser von 0.5 mm aufweist ausgeführt. An einer Seitenkante und an den angrenzenden Endbereichen der an diese Seitenkante anstoßenden Kanten des Filterelements 307 ist ein ca. 3 mm hoher Rand 312, dessen Oberfläche ebenfalls eine Siebstruktur aufweist, ausgebildet In der Wandung des Wegeventils 301 befinden sich Bohrungen, in die jeweils bündig zur inneren Oberfläche des Wegeventils eine LED 308, eine Photodiode 309 und eine weitere Photodiode 310 vakuumdicht eingepaßt sind. In der Meßkammer 304 sind voneinander isolierte Elektroden 313 und 314 zur Leitfähigkeitsmessung der Milch vorgesehen.

Fig. 1a zeigt das Wegeventil 301 in Betriebsstellung zu Beginn des Melkvorgangs, wenn der Schieber 305 den Milchauslaß 303 gänzlich verschließt. In der Saugphase, die Milch aus der Zitze heranführt, trifft der Milchstrom auf das Filterelement 307, auf dessen Oberfläche sich je nach Qualität der Milch Partikel ablagem. Nach Ablauf der Saugphase schaltet der Steuerrechner (nicht gezeigt) der Detektiereinrichtung die LED 308 ein und wertet anschließend das von Photodiode 310 erzeugte Signal des am Filterelements 307 reflektierten Lichts aus. Wenn das Ergebnis der Auswertung eine ausreichende Qualität der Milch (geringe Partikelmenge) ergibt, steuert der Steuerrechner das Wegeventil so, daß dieses die in Fig. 1b gezeigte Betriebsstellung einnimmt. Milchauslaß 303 ist nun geöffnet und leitet die Milch in die für einwandfreie Milch vorgesehene Leitung. Die Oberfläche des Filterelements 307 wird in dieser Stellung relativ schräg angeströmt, so daß ein Teil eventuell von der vorhergehenden Saugphase vorhandener Partikel "abgewaschen" und am Randbereich angesammelt wird. Nach Beendigung jeder Saugphase wird das Signal der Photodiode 309 ausgewertet. Wenn ein bestimmter Schwellwert überschritten wird, der darauf hindeutet, daß sich die Partikelzahl in der Milch vergrößert hat, wird das Wegeventil angewiesen, wieder die Anfangsstellung einzunehmen, in der die Milch ausgesondert wird und eine genauere Messung der Partikel möglich ist, da sich in dieser Stellung im wesentlichen alle Partikel auf der Oberfläche ablagem.

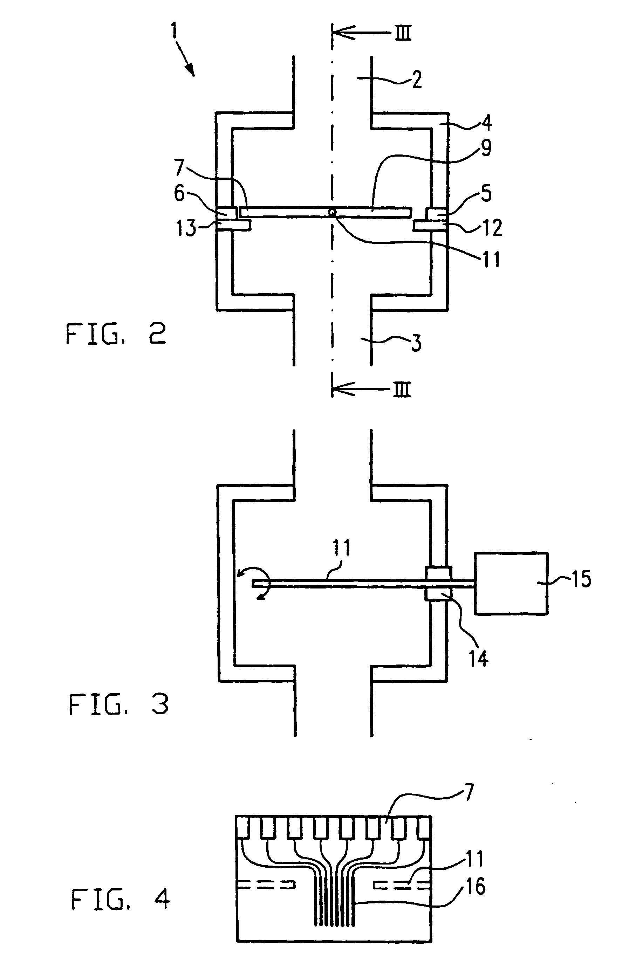

Weitere Ausführungsformen der vorliegenden Erfindung sollen nun in bezug auf die Figuren 2, 3 und 4 beschrieben werden.

In Fig. 2 ist eine Meßkammer einer erfindungsgemäßen Detektiereinrichtung in seitlichem Querschnitt gezeigt. Die Meßkammer 1 weist einen Einlaß 2 und einen Auslaß 3 auf. Die Meßkammer ist zwischen dem Melkbecher und dem Mehrwegeventil in der Milchleitung vorgesehen. Eine Wandung 4 der Meßkammer besitzt an diametral gegenüberüegenden Seiten jeweils eine Halterung 5 bzw. 6. Auf Halterung 6 liegt ein Randbereich 7 eines Filterelements 9 auf. Filterelement 9 ist mit einer drehbaren Achse 11 starr verbunden. Die Achse 11 liegt mittig zum Durchmesser des Einlasses 2. Zu den Halterungen 5 und 6 führen jeweils vakuumdichte Kabelzuführungen 12 und 13 mit elektrischen Leitungen. Die Oberflächen der Halterungen 5 und 6 weisen jeweils elektrisch leitfähige Bereiche auf, die mit den Kabeln aus den Durchführungen 12 und 13 mit dem Bereich außerhalb der Detektiereinrichtung eine elektrische Verbindung ermöglichen.

Fig. 3 zeigt die Meßkammer 1 entlang des Schnittes III-III aus Fig. 2. Achse 11 ist mittels eines vakuumdichten Lagers 14 in der Wandung 4 gelagert und mechanisch mit einer Antriebseinheit 15 gekoppelt. In der dargestellten Ausführungsform ist die Antriebseinheit als Elektromotor ausgeführt, der von einem Kontrollrechner mittels eines Treibers (beides ist nicht gezeigt) angesteuert wird. Natürlich sind auch andere Antriebsarten möglich. So könnte beispielsweise der Antrieb pneumatisch erfolgen.

Fig. 4 zeigt eine beispielhafte Ausführungsform des Filterelements 9. Der Randbereich 7 der Filteroberfläche weist elektrische Kontaktflächen auf, die ihrerseits jeweils elektrisch leitend sind und mit länglich geformten, definiert beabstandeten elektrisch leitfähigen Elementen 16 verbunden sind. Die Elemente 16 sind gänzlich elektrisch leitend oder besitzen zumindest Oberflächenbereiche, die elektrisch leitfähig sind. Wie in Fig. 4 dargestellt, sind die elektrischen Kontaktflächen breit ausgeführt, um einen zuverlässigen Kontakt zu den entsprechend geformten Kontaktflächen an den Halterungen 5 und 6 zu gewährleisten. Die Elemente 16, die die eigentlich aktive Filterfläche des Filterelements 9 bilden, können beispielsweise aus dünnen Metallstäben, die eigenstabil einen definierten Abstand voneinander beibehalten, bestehen. In Fig. 4 ist eine parallele Anordnung der Elemente gezeigt, es sind auch andere geometrische Konfigurationen der Elemente denkbar.

Es besteht auch die Möglichkeit, die Oberflächen von Isolatoren mit einer leitfähigen Auflage zu beschichten. Beispielsweise könnte ein Filterelement aus chemisch passivem Kunststoff hergestellt werden, das eine gewünschte Filterstruktur aufweist z.B. eine Gitterstruktur, und anschließend mit Aluminium oder Silber entsprechend einer gewünschten Struktur (beispielsweise nur parallele Gitterstege) beschichtet werden. Auch die Rückseite kann beschichtet werden, so daß auch in dieser Variante zwei aktive Filterflächen zur Verfügung stehen. Femer ist es auch möglich, lediglich in einen Rahmen aus geeignetem Material eingespannte Drähte, die z.B. als Widerstandsdrähte ausgebildet sind, als aktive Filterfläche zu verwenden. Die Abstände der Elemente in der aktiven Filterfläche können unterschiedlich gewählt werden, so daß Bereiche entstehen, die Partikel ab einer unterschiedlichen Mindestgröße ausfiltem. In der gezeigten Ausführungsform ist weiterhin die Achse 11 nicht durchgehend ausgeführt, um den aktiven Filterbereich des Filterelements 9 nicht zu beeinflussen.

Während des Betriebs der Melkanlage gelangt während einer Saugphase Milch durch den Einlaß 2 in die Meßkammer 1 der Detektiereinrichtung und trifft nachfolgend auf das Filterelement 9, wobei auf der dem Michstrom zugewandten Oberfläche Partikel ausgefiltert werden. In der anschließenden Entlastungsphase, wenn kein Milchstrom mehr vorhanden ist, bestimmt der Kontrollrechner (nicht gezeigt), der über die Leitungen in den Durchführungen 12 und 13 mit den Halterungen 5 und 6 verbunden ist, die Widerstandsänderungen von benachbarten Elementen. Durch die auf der Filteroberfläche abgelagerten Milchpartikel bilden sich zwischen benachbarten Elementen elektrische Kontakte aus, deren Widerstand sowohl von der Zahl, Größe sowie Art der Partikel abhängt: Aus den ermittelten Widerstandswerten kann der Kontrollrechner mittels geeigneter Algorithmen Schwellwerte zum Ansteuem des Wegeventils bestimmen. Nach der Messung und vor der nächsten Saugphase sendet der Kontrollrechner einen Impuls zur Antriebseinheit 15, welche in Reaktion auf dieses Signal das Filterelement um 180° dreht, so daß der Randbereich des Filterelements 9 auf der Halterung 5 liegt. Die obere Seite des Filterelements wird bei Beginn der nächsten Saugphase von der Milch angeströmt und filtert Partikel aus. Gleichzeitig werden durch den Milchstrom die auf der unteren Seite des Filterelements haftenden Partikel weggespült. Beim anschließenden Entlastungstakt führt der Kontrollrechner die Bestimmung der Widerstandswerte wieder in der oben beschriebenen Art durch und sendet ein weiteres Signal zur Antriebseinheit, woraufhin diese das Filterelement 9 in die ursprüngliche Position zurückdreht.

Die oben erwähnte "Back-Splash"-Reinigung der Fitteroberfläche läßt sich auch mittels zusätzlicher Vorrichtungen durchführen. So könnte in einer Anordnung ein Teil des Milchstroms in einem Reservoir gespeichert und nach der Messung verwendet werden, mittels einer Düse und Druckluft die Rückseite des Filters anzuströmen, so daß das Filterelement nicht bewegt werden muß.

Die Ausbildung des Filterelements in der soeben beschriebenen Ausführungsform ist lediglich als Beispiel zu verstehen. Femer kann die elektrische Konfiguration geändert sein, beispielsweise indem Wechselströme eingespeist werden, um Induktivität bzw. Kapazität etc. zu messen. Femer ist es vorteilhaft, möglichst häufig Referenzmessungen während des Melkvorgangs auszuführen, um Veränderungen der Meßbedingungen (Benetzung der Kontaktflächen, Widerstandsänderungen durch nicht abgespülte Partikel etc.) berücksichtigen zu können. Weiterhin kann im Zusammenwirken mit anderen Parametern (Durchflußmenge, Temperatur etc.) die Genauigkeit der Partikelbestimmung erhöht werden.

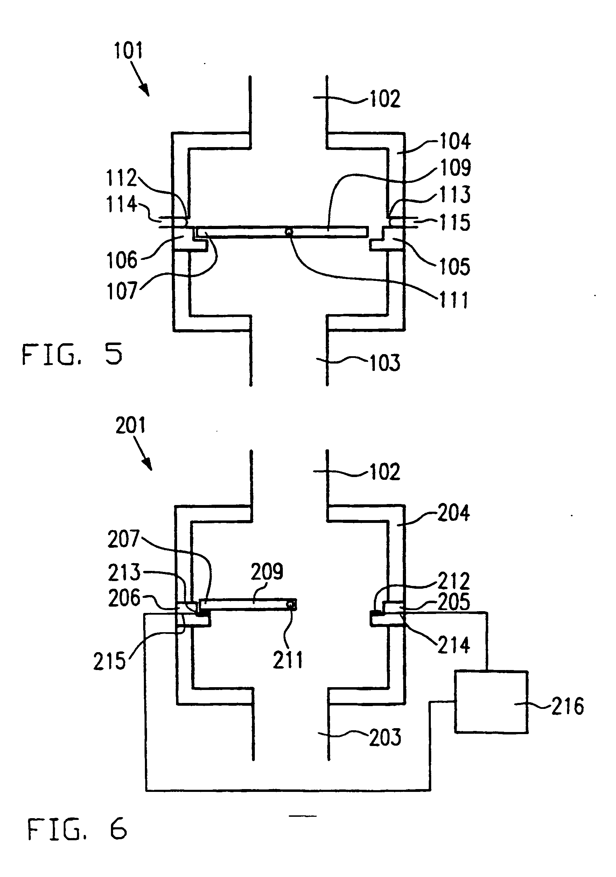

Fig. 5 zeigt eine dritte Ausführungsform der vorliegenden Erfindung. Eine Detektiereinrichtung 101 weist einen Einlaß 102 und einen Auslaß 103 auf. Eine Wandung 104 besitzt an diametral gegenüberliegenden Seiten jeweils eine Halterung 105 bzw. 106. Auf Halterung 106 liegt ein Randbereich 107 eines Filterelements 109 auf. Filterelement 109 ist mit einer drehbaren Achse 111 starr verbunden. Die Achse 111 liegt mittig zum Durchmesser des Einlasses 102. Die Wandung 104 ist mit Öffnungen 112 und 113 versehen, die jeweils eine Leuchtdiode 114 und eine Photodiode 115 aufnehmen. LED 114 und Photodiode sind so angeordnet, daß die Photodiode 115 das von der LED 114 emittierte Licht ab einer bestimmten Drehposition des Filterelements 109 nur empfangen kann, wenn dieses Licht das Filterelement 109 durchdrungen hat.

In Betrieb scheiden sich, wie es im Zusammenhang mit der ersten und zweiten Ausführungsform beschrieben wurde, Partikel auf der Filteroberfläche ab. Nach Versiegen des Milchstroms sendet der Kontrollrechner ein Signal aus und veranlaßt die (nicht gezeigte) Antriebseinheit dazu, das Filterelement zu drehen. Wenn eine vorbestimmte Stellung erreicht ist, wird die LED 114 vom Kontrollrechner eingeschaltet und die Intensität des Lichts, das durch das Filterelement hindurchtritt wird während der Drehung gemessen und an den Kontrollrechner übermittelt Wenn eine zweite vorbestimmte Drehposition erreicht ist, wird die LED 114 wieder abgeschaltet Der Kontrollrechner kann aus der gemessenen Intensitätsverteilung einen Schwellwert für das Betätigen des Mehrwegeventils bestimmen.

In der obigen Ausführungsform ist es auch möglich, anstatt oder zusätzlich, die Photodiode 115 so anzuordnen, daß Licht detektiert wird, das von der Filterobeffläche reflektiert wird. Vorteilhafterweise enthalten dazu die Oberflächen des Filterelements 109 Bereiche mit hoher Refleküvität die sich dann abhängig von der Filterbelegung, der Partikelzahl und deren Größe ändert. Die LED kann auch durch andere geeignete Strahlungsquellen (Laserdioden, Glühlampen, IR-LED, Mikrowellensender) ersetzt werden, wobei dann das Empfängerelement 115 entsprechend auf die Wellenlänge(n) abzustimmen ist Vorteilhafterweise kann die Strahlungsquelle im wesentlichen monochromatische Strahlung emittieren, deren Wellenlänge so gewählt wird, daß eine möglichst ungleiche Wechselwirkung jeweils von Milch bzw. Partikeln und Strahlung stattfindet. Bevorzugt kann die Strahlungsquelle auf entsprechende Ansteuerung des Kontrollrechners hin Strahlung mit unterschiedlicher Wellenlänge emittieren, indem beispielsweise unterschiedliche LEDs innerhalb der Strahlungsquelle angesteuert werden.

Fig. 6 zeigt eine vierte Ausführungsform der vorliegenden Erfindung. Eine Detektiereinrichtung 201 weist einen Einlaß 202 und einen Auslaß 203 auf. Eine Wandung 204 besitzt an diametral gegenüberliegenden Seiten jeweils eine Halterung 205 bzw. 206. Auf Halterung 206 liegt ein Randbereich 207 eines Filterelements 209 auf. Filterelement 209 ist mit einer drehbaren Achse 211 starr verbunden, welche gleichzeitig auch als Berandung des Filterelements dient. Die Achse 211 liegt mittig zum Durchmesser des Einlasses 202. An den Halterungen 205 und 206 sind jeweils Piezoelemente 212 und 213 angeordnet, die elektrisch mittels Leitungen in Durchführungen 214 und 215 mit einer Schwingkreisschaltung 216 und dem Kontrollrechner verbunden sind.

Im Betrieb trifft ein Teil des Milchstroms während der Saugphase auf die Filteroberfläche des Filterelements 209, wobei sich Partikel auf der Oberfläche ansammeln. Nach Versiegen des Milchstroms wird auf ein Signal des Kontrollrechners hin das Piezoelement, das elektrisches Bestandteil der Schwingkreisschaltung 216 ist, zum Schwingen angeregt. Die Eigenfrequenz des Schwingkreises hängt von der auf die vom Filterelement 209 auf die Oberfläche des Piezoelements 216 ausgeübten Kraft bzw. dessen Masse und damit von der Partikelmenge ab. Der Kontrollrechner kann aus der Frequenzdifferenz bezüglich einer Referenzmessung so die Menge der Partikel bestimmen und daraus einen Schwellwert für das Betätigen des Mehrwegeventils ableiten. Die Form des Filterelements 209 wurde asymmetrisch bezüglich der Achse 211 gewählt, um eine möglichst stark unterschiedliche Kraftwirkung auf das Piezoelement 216 für den partikelfreien im Vergleich zum partikelbehafteten Zustand des Filterelements 209 zu erreichen.

In einer weiteren, nicht dargestellten Ausführungsform ist eine Laserdiode und eine Photodiode so angeordnet, daß der von der Laserdiode emittierte, parallel und mit einem definierten Abstand zur Oberfläche eines Filterelements verlaufende Strahl von der Photodiode nachgewiesen werden kann. Wenn sich Partikel mit einem Durchmesser, der den definierten Abstand übersteigt, ablagem bzw. wenn sich Partikel aufeinander ablagem, wird dies von der Photodiode registriert und der Kontrollrechner kann das Signal entsprechend auswerten.

In einer weiteren, nicht gezeigten Ausführungsform sind ein Ultraschallsender und ein Ultraschallempfänger so an einer Halterung in einem Meßraum angebracht, daß beim einsetzenden Milchstrom sich die Membranen des Senders und Empfängers in unmittelbarer Nähe des Milchstroms befinden. Aufgrund der unterschiedlichen Schalleitung ergeben sich unterschiedliche Signale für Milch mit bzw. ohne Partikel. Aus den detektierten Signalen des Empfängers kann der Kontrollrechner dann Schwellwerte für das Betätigen des Wegeventils berechnen. Der Meßraum kann auch so gestaltet sein, daß die Membran des Senders und Empfängers ständig in die Milch eingetaucht sind. Vorteilhafterweise könnte dies in einem Meßraum, der einen Aufbau ähnlich dem der in der eingangs erwähnten ersten Ausführungsform stattfinden.

In vorteilhafter Weise wird die vorliegende Erfindung mit der in der DE 196 30 146 beschriebenen Erfindung kombiniert. Eine Möglichkeit hierfür besteht z.B. darin, die in der Fig. 1 gezeigte Meßkammer in ihrem Inneren mit einer Strahlungsquelle und einem strahlungsempfindlichen Sensor (z.B. LED, Photodiode) auszustatten, womit die Partikelzahl in der strömungsberuhigten Zone im Inneren der Kammer durch Vergleich mit Referenzmeßwerten von partikelfreier bzw. partikelarmer Milch ermittelt werden kann.

Für alle Ausführungsformen, die ein Filterelement zur Messung verwenden, wurde ein Aufbau gewählt, der eine Messung der Partikelzahl in jeder Saugphase ermöglicht. Durch eine identische Ausbildung der Halterungen, auf denen das Filterelement bei jeder 180° Drehung aufliegt, ist somit in jeder dieser Endstellungen des Filters eine Messung der Partikel möglich. Es kann aber auch auf eine der Halterungen 5 oder 6 aus Kostenerspamis oder einer einfacheren Bauweise zufolge verzichtet werden. Eine Messung kann dann nur noch nach jeder zweiten Saugphase durchgeführt werden, da das Filter in der um 180° gedrehten Stellung, in der die Filterreinigung stattfindet, nicht auf einer Halterung aufliegt. Vorteilhafterweise werden sehr oft Referenzmessungen durchgeführt z.B. in der Weise, daß das Filterelement zunächst während mehrerer Saugphasen gründlich "gespült" wird, indem es nahezu parallel zum Milchstrom ausgerichtet wird, um anschließend eine Messung an der gespülten Filteroberfläche vorzunehmen.

Die obigen Ausführungsformen wurden als separate Einheiten beschrieben, es ist jedoch möglich, die verschiedenen Meßmethoden zu kombinieren, um eine höhere Zuverlässigkeit zu emeichen. Vorteilhafterweise können die Ausführungsformen, die kein Filterelement benutzen, mit jenen mit Filterelement kombiniert werden.

Ferner kann in den erfindungsgemäßen Ausführungsformen, welche ein Filterelement zur Detektierung von Partikeln verwenden, vorteilhafterweise das drehbare Filterelement während eines Spülvorgangs in ständige abwechselnde Vorwärts-und Rückwärtsdrehung versetzt werden und damit eine sehr effiziente Reinigung der Meßeinrichtung gewährleisten.

Die Meßwerte, die aus der Detektion der Partikel erhalten werden, können selbstverständlich nicht nur zur Ansteuerung für das Mehrwegeventil herangezogen werden, sondem auch für komplexere Analysen des Melkvorgangs.

In vorteilhafter Ausgestaltung der Erfindung kann der Kontrollrechner so programmiert sein, daß er beim Vergleich von erfaßten bzw. berechneten Werten (Widerstand, Lichtmenge, Frequenzänderung, etc.) Meßwertzeitprofile über den Melkzeitraum berücksichtigt und anhand entsprechend gespeicherter Funktionen Korrekturwerte für den erfaßten Meßwert ermittelt

Vorteilhaft können in dem Kontrollrechner zu Korrekurzwecken auch als Normale dienende Werte gespeichert sein, die z.B. während eines Spülarbeitsgangs nach Ablauf einer bestimmten Spülzeit ermittelt werden und z.B. repräsentativ für die milchfreie Meßkammer sind. Zum Zwecke der Ermittlung solcher Normalwerte insbesondere eines Widerstandsnormalwerts, eines Leuchtstärkenormalwerts und eines Frequenznormalwerts, kann auch eine Standardmeßzelle, bei der es sich insbesondere um eine die Meßgeometrie der Meßkammer der Detektiereinrichtung nachbildende Meßkammer handelt, an einer geeigneten, strömungsberuhigten Stelle im Leitungssystem angeordnet werden.

Des weiteren können die Wegeventileinrichtung und die Detektiareinrichtung jeweils für jede Zitze vorgesehen werden. Die gesonderte Überwachung der Milch aus jeder Zitze ist zweckmäßig, da bei Eutererkrankungen eine Qualitätsbeeinträchtigung der Milch auf einzelne Zitzen beschränkt sein kann.

Die Erfassung der sensorischen Merkmale in der Milch zum Zwecke der Aussonderung von Milch kann über diesen Zweck hinaus der allgemeinen gesundheitlichen Überwachung der Tiere dienen, indem durch die erfolgte Aussonderung an sich und durch Analysen der ausgesonderten Milch Krankheiten, insbesondere schon in deren subklinischem Vorstadium, in dem die bereits eingetretene Erkrankung noch nicht an äußerlich sichtbaren Veränderungen erkannt werden kann, diagnostizierbar sind.

Vorteilhaft könnte in Verbindung mit einem Milchflußmesser die erfindungsgemäße Vorrichtung auch dazu verwendet werden, Partikelmengen pro Einheitsvolumen zu bestimmen und somit generell eine Langzeitüberwachung der Qualität der Milch bezüglich der Partikelzahl unabhängig von individuellen Schwankungen in der abgegebenen Milchmenge durchzuführen.

Schließlich kann der Kontrollrechner zur Ansteuerung der Wegeventileinrichtung auch tierbezogene Daten, z.B eines Herdenmanagementsystems, verarbeiten, und damit eine Aussonderung der Milch bestimmter Tiere unabhängig von Meßwerten bewirken.

Ferner kann ein Eingabeelement sowie eine Anzeigeeinheit vorgesehen werden, um relevante Daten an den Kontrollrechner einzugeben, wie z.B. welches Tier aktuell gemolken wird, und um dem Anlagenbetreiber relevante Informationen bereitzustellen. Über eine Schnittstelle könnten die gespeicherten Daten beispielsweise drahtlos an eine externe Rechnereinheit übertragen werden, um eine weitergehende Datenanlayse zu betreiben.

## Patentansprüche

1. Vorrichtung zur automatischen Milchaussonderung beim maschinellen Melken mit
einer Messeinrichtung zum Ermitteln sensorischer Merkmale im Milchstrom,
einer Wegeventileinrichtung (301) mit einem Milcheingang (302) und mehreren Milchausgängen (303, 311) sowie einer Verschlusseinrichtung (305) zur wahlweisen Absperrung der Milchausgänge und zum wahlweisen Leiten des Milchstroms in eine von mehreren Zweigleitungen, und
einer zur Aussonderung von Milch auf die Wegeventileinrichtung einwirkenden Steuereinrichtung,
wobei ein flächiges Filterelement mit mindestens einem Filterbereich zum Ausfiltern von Partikeln aus dem Milchstrom umfasst
die Messeinnchtung eine Detektiereinrichtung (307, 308, 309, 310) umfasst, die ein flächiges Filterelement mit mindestens einem Filterbereich zum Ausfiltern von Partikeln aus dem Milchstrom umfasst **dadurch gekennzeichnet, dass** die Detektierichtung ausgebildet ist.

2. Vorrichtung gemäß Anspruch 1, **dadurch gekennzeichnet, dass** die Detektiereinrichtung eine elektronische Auswertungsschaltung umfasst.

3. Vorrichtung gemäß Anspruch 1 oder 2. **dadurch gekennzeichnet, dass** die Detektiereinrichtung einen Signalgeber (113) zum Ausgeben von Signalen und einen Signalempfänger (114) zum Empfangen von Signalen, die vom Signalgeber ausgegeben worden, umfasst

4. Vorrichtung gemäß Anspruch 1. **dadurch gekennzeichnet, dass** die Detekliereinrichtung eine EinneMung zum Reinigen des Filterelements umfasst

5. Vorrichtung nach Anspruch 1 oder 4 **dadurch gekennzeichnet, dass** das Filter element um eine Achse drehbar ausgebildet ist

6. Vorrichtung nach Anspruch 5. **dadurch gekennzeichnet, dass** die Detektiereinrichtung eine Antriebseinheit zur Drehung des Filterelements aufweist

7. Vorrichtung nach einem der Ansprüche 1. oder 5 bis 6, **dadurch gekennzeichnet, dass** das Filterelement beabstandete und zueinander Isoliert angeordnete elektrisch leitfähige Elemente umfasst

8. Vorrichtung nach Anspruch 7, **dadurch gekennzeichnet, dass** die elektrisch leitfrähigen Elemente als Widerstandsdrahte ausgebildet sind.

9. Vorrichtung nach Anspruch 7. **dadurch gekennzeichnet, dass** das Filterelement einen ersten Filterbereich, in dem die leitrahigen Elemente einen ersten Abstand voneinander aufweisen und einen zweiten Filterbereich, in dem die leitfähigen Elemente einen zweiten Abstand voneinander aufweisen, umfasst.

10. Vorrichtung nach einem der Ansprüche 1 bis 9, **dadurch gekennzeichnet, dass** die Detektiereinrichtung eine Strahlungsquelle und ein strahlungsempfindliches Sensorelement umfasst.

11. Vorrichtung nach Anspruch 10, **dadurch gekennzeichnet, dass** die Strahlungsquelle und das strahlungsempfindliche Sensorelement so angeordnet sind, dass das strahlungsempfindliche Sensorelement die Strahlung nach erfolgter Wechselwirkung mit einer Oberfläche des Filterelements empfängt.

12. Vorrichtung nach einem der Ansprüche 1 bis 11, **dadurch gekennzeichnet, dass** zumindest einer der Filterbereiche einen reflektierenden Bereich aufweist

13. Vorrichtung nach einem der Ansprüche 10 bis 12, **dadurch gekennzeichnet, dass** die Strahlungsquelle ausgebildet ist, im wesentlichen monochromatische Strahlung zu emittieren.

14. Vorrichtung nach einem der Ansprüche 10 bis 13, **dadurch gekennzeichnet, dass** die Strahlungsquelle so angeordnet ist, dass sie während einer Messphase Strahlung im wesentlichen parallel zur Filteroberfläche aussendet.

15. Vorrichtung gemäß Anspruch 3, **dadurch gekennzeichnet, dass** der Signalgeber ein Ultraschallsender ist.

16. Vorrichtung gemäß Anspruch 15, **dadurch gekennzeichnet, dass** der Ultraschallsender und der Signalempfänger räumlich so angeordnet sind, dass diese während der Messung in Kontakt mit der Milch sind.

17. Vorrichtung nach einem der Ansprüche 1 bis 16, **dadurch gekennzeichnet, dass** die Detektiereinrichtung ein Filterelement und eine Mikrowaage umfasst.

18. Vorrichtung nach Anspruch 17, **dadurch gekennzeichnet, dass** die Mikrowaage ein Piezoelement und eine Schwingkreisschaltung umfasst.

## Claims

1. An apparatus for the automatic selecting out of milk during machine milking comprising:
a measurement apparatus for obtaining sensory characteristics in the milk stream,
a distributing valve mechanism (301) with a milk inlet (302) and several milk outlets (303, 311) as well as a seal mechanism (305) for optionally closing the milk outlets and for optionally guiding the milk stream into one of several branch lines,
a control means element for driving the distributing valve mechanism for the selecting out of milk, wherein said measuring apparatus comprises
a detection means (307, 308, 309, 310) comprising an area-like flat filter element with at least one filter area for the filtering out of particles from the milk stream **characterized in that** the detection means is adapted to automatically detect particles in a flow path of the milk stream.

2. An apparatus in accordance with claim 1, **characterized In that** the detection means comprises an electronic analysis circuit.

3. An apparatus in accordance with claim 1 or 2, **characterized in that** the detection means comprises a signal transmitter (113) for the transmitting of signals and a signal receiver (114) for the receiving of signals that are transmitted from the signal transmitter.

4. An apparatus in accordance with claim 1, **characterized In that** the detection means comprises an element for cleaning the filter element.

5. An apparatus according to claim 1, **characterized In that** the filter element is rotatable around an axis.

6. An apparatus according to claim 5, **characterized in that** the detection means has a driving element for rotating the filter element.

7. An apparatus according to claim 1 or 5 to 6, **characterized in that** the filter element comprises electrically conductive elements that are arranged at a distance and isolated from one another.

8. An apparatus according to claim 7, **characterized In that** the electrical conductive elements are realized as resistance wires.

9. An apparatus according to claim 7, **characterized in that** the filter element comprises a first filter area in which the electrical conductive elements have a first distance from one another and a second filter area in which the electrical conductive elements have a second distance from one another.

10. An apparatus according to any of claims 1 to 9, **characterized in that** the detection means comprises a radiation source and a radiation sensitive sensor element.

11. An apparatus according to claim 10, **characterized in that** the radiation source and the radiation sensitive sensor element are so arranged that the radiation sensitive sensor element receives the radiation after an interaction with the surface of the filter element has occurred.

12. An apparatus according to any of claims 1 to 11, **characterized in that** at least one of the filter areas has a reflective area.

13. An apparatus according to any of claims 10 to 12, **characterized in that** the radiation source is adapted to emit substantially monochromatic radiation.

14. An apparatus according to any of claims 10 to 13, **characterized in that** the radiation source is adapted to transmit radiation substantially parallel to the filter surface during a measurement phase.

15. An apparatus according to claim 3, **characterized in that** the signal transmitter is an ultrasound transmitter.

16. An apparatus according to claim 15, **characterized in that** the ultrasound transmitter and the signal receiver are spatially arranged to be in contact with the milk during the measuring.

17. An apparatus according to any of claims 1 to 16, **characterized in that** the detection means comprises a filter element and a microbalance.

18. An apparatus according to claim 17, **characterized in that** the microbalance comprises a piezo element and an oscillatory circuit.

## Revendications

1. Dispositif pour la séparation automatique du lait lors de la traite mécanique
avec un système de mesure pour déterminer les caractéristiques sensorielles dans le flux de lait,
avec un système de distributeurs (301) avec une entrée pour le lait (302) et plusieurs sorties pour le lait (303, 311) et avec un système de fermeture. (305) pour boucher les sorties pour le lait et pour le guidage sélectif du flux de lait dans une parmi plusieurs conduites de dérivation et
avec un système de commande agissant sur le système de distributeurs pour la séparation du lait,
le système de commande comprenant un système de détection (307, 308, 309, 310) avec un élément de filtration à grande surface avec au moins une zone de filtration pour filtrer les particules hors du flux de lait
**caractérisé en ce que** le système de détection est conçue pour la détection automatique de particules dans un trajet d'écoulement du flux de lait.

2. Dispositif selon le revendication 1, **caractérisé en ce que** le système de détection comprend un circuit électronique d'évaluation.

3. Dispositif selon la revendication 1 ou 2, **caractérisé en ce que** le système de détection comprend un transmetteur de signaux (113) pour délivrer des signaux et un récepteur de signaux (114) pour réceptionner des signaux qui sont délivrés par le transmetteur de signaux.

4. Dispositif selon la revendication 1, **caractérisé en ce que** le système de détection comprend un système de nettoyage de l'élément de filtration.

5. Dispositif selon la revendication 1 ou 4, **caractérisé en ce que** l'élément de filtration est conçu de façon rotative autour d'un axe.

6. Dispositif selon la revendication 5, **caractérisé en ce que** le système de détection comporte une unité d'entraînement pour la rotation de l'élément de filtration.

7. Dispositif selon l'une quelconque des revendications 1 ou 5 à 7, **caractérisé en ce que** l'élément de filtration comprend des éléments conducteurs d'électricité disposés à distance mutuelle et isolés entre eux.

8. Dispositif selon la revendication 7, **caractérisé en ce que** les éléments conducteurs d'électricité sont conçus sous la forme de fils de résistance.

9. Dispositif selon la revendication 7, **caractérisé en ce que** l'élément de filtration comprend une première zone de filtration dans laquelle les éléments conducteurs présentent une première distance mutuelle et une deuxième zone de filtration dans laquelle les éléments conducteurs présentent une deuxième distance mutuelle.

10. Dispositif selon l'une quelconque des revendications 1 à 9, **caractérisé en ce que** le système de détection comprend une source de rayonnement et un élément détecteur sensible aux rayonnements.

11. Dispositif selon la revendication 10, **caractérisé en ce que** la source de rayonnement et l'élément détecteur sensible aux rayonnements sont disposés de façon à ce que l'élément détecteur sensible aux rayonnements réceptionne le rayonnement après une interaction avec une surface de l'élément de filtration.

12. Dispositif selon l'une quelconque des revendications 1 à 11, **caractérisé en ce qu'**au moins l'une des zones de filtration comporte une zone réfléchissante.

13. Dispositif selon l'une quelconque des revendications 10 à 12, **caractérisé en ce que** la source de rayonnement est conçue pour émettre un rayonnement essentiellement monochromatique.

14. Dispositif selon l'une quelconque des revendications 10 à 13, **caractérisé en ce que** la source de rayonnement est disposée de façon à émettre pendant une phase de mesure un rayonnement sensiblement parallèle à la surface de filtration.

15. Dispositif selon la revendication 3, **caractérisé en ce que** le transmetteur de signaux est un émetteur d'ultrasons.

16. Dispositif selon la revendication 15, **caractérisé en ce que** l'émetteur d'ultrasons et le récepteur de signaux sont disposés dans l'espace de façon à être en contact avec le lait pendant l'opération de mesure.

17. Dispositif selon l'une quelconque des revendications 1 à 16, **caractérisé en ce que** le système de détection comprend un élément de filtration et une microbalance.

18. Dispositif selon la revendication 17, **caractérisé en ce que** la microbalance comprend un élément piézoélectrique et un montage en circuit oscillant.
